# EUROPEAN PATENT APPLICATION

(11) **EP 0 870 938 A1**
(43) Date of publication of application: **14.10.1998**
(21) Application number: 98106097.3
(22) Date of filing: 03.04.1998
(51) Int. Cl.: F16B 37/04

(54) **Fastening spring**

(30) Priority: 10.04.1997 IT TO970077 U
(71) Applicant: FIAT AUTO S.p.A., 10135 Torino (IT)
(72) Inventor: Crivello, Giuseppe, 10029 Villastellone (Torino) (IT)
(74) Representative: Di Francesco, Gianni

(57) **Abstract**

This invention relates to a spring designed to allow coupling of plastic rigid or semi-rigid components (1,3), of limited thickness, particularly those used in vehicle bodies, presenting a transversal section, shaped in S, with a lower surface (17) and central surface (19) creating a lower loop (13) of the S section, having through holes (23,25) designed for the insertion of the shank of a screw (11) screwed into a hole (35) in the upper surface (29) of the upper loop (27).

## Description

This invention relates to a spring designed to allow coupling of two plastic components, and, more specifically, for plastics used for vehicle body coating.

This type of spring is fixed with a special threading-type screw, or with a selfthreading screw, that can be screwed in a hole on a sheet metal piece or latten.

The purpose of this screw is to keep two rigid or semi-rigid plastic sheets compressed together, connected for various reasons and purposes, and used usually in the Internal section of a vehicle's compartment.

The resulting coupling has to be elastic, to avoid any possible clearance or tedious and unwanted noises created, through time, between the connected parts, due to small failures or compressions of the two contacting plastic parts.

Springs used at the present time are available in widely used configurations, in a metal strip, with width varying depending on the application, and folded In a relatively closed S shape. One of the plastic sheets is inserted in the first (or lower) loop, whilst the second shett, bearing a hole for the insertion of a screw, is placed on the external surface of the above mentioned first loop. A screw is tightened through the openings on the first plastic sheet and through the external surface of the loop, in a hole known as the 〈〈 Prestole 〉〉 type, carried out in the central separating surface, common to the first (lower) and second (higher) loop.
In this way, when the screw is tightened, both plastic sheets are compressed, one against the other, between the head of the screw (or the associated washer), and the central, separating section of the loops.
Another hole is made on tile external surface of the second loop, complete with special tongues, that prevent the screw from unwinding if exposed to vibration, or if the coupling should loose its elasticity.

However, the disadvantage of the elasticity of this spring-type configuration is that it results in a direct compression on one of the plastic sheets that are connected. Moreover, the level of compression is not identical, but is, on the other hand, much higher on the section opposite the loop connection section. As a result, the plastic is, in turn, much more easily and rapidly compressed, leading to a loosening of the connection, and a creation of unwanted noise.

Accordingly, it is a primary object of this invention to overcome these and other disadvantages.

These objects are achieved by a spring used to match rigid or semi-rigid plastic sheets, of limited thickness, used particularly on vehicle bodies, as defined in appended claim 1.

Other characteristics and advantages will be defined in the depended claims, provided only as an example, and referring to the accompanying drawings, in which :

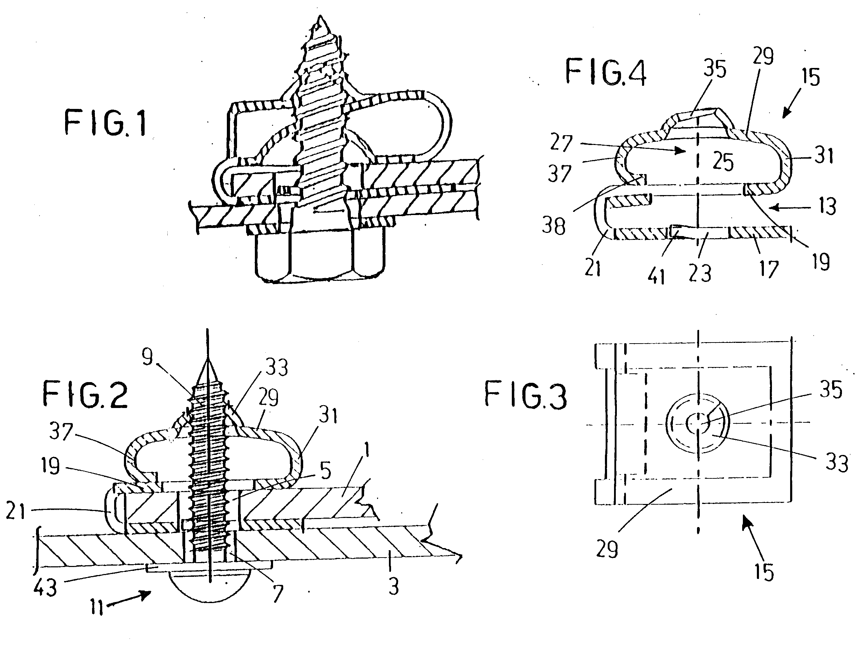

- Figure 1 is a section side view of existing spring, in operation ;
- Figure 2 is a section side view of the spring object of this invention, in operation ;
- Figure 3 is a top view of the spring of figure 2, and
- Figure 4 is a sectional view of the spring in figure 3.

Referring to the drawings, wherein like numerals are used to designate like parts throughout the several views, 1 indicates a rigid or semi-rigid plastic sheet, that must be fitted in a drop-out type way with another sheet, designated by numeral 3.

Both sheets bear through holes 5 and 7, for the insertion of the shank 9 of the self-screwing screw 11. Sheet 1 is inserted in loop 13 of a spring 15, shaped and turned in an S type configuration. Loop 13 is defined by a lower surface, 17, and by a central surface, 19, connected by a curved surface, bottom 21. For both surfaces, the first, 17, bears through hole 23 whilst the second, 19, bears a rectangular stress raiser 25, that replaces most of the surface itself, leaving only the circumferential external section, on three sides, two of which are confined by bottom surface 21.
The bottom surface 21 is alos affectedby the stress raiser 25, and therefore only has two lateral strips. Spring 15 has a second loop 27, defined by the central surface 19 and by a higher surface 29, connected by a bottom surface 31. Surface 29, bearing hole 35 with ash type 33, normally defined as the 〈〈 Prestole 〉〉 type, used to screw the shank 9 of screw 11. Surface 29, on the section opposite connection surface 31, bears a wing 37, turned downwards, with tip 38 turned towards the inside section of loop 27. Wing 37 is long enough to be leant on tip 38 on surface 19, corresponding to connection surface 21.

As shown in drawing 2, sections are connected as described hereinafter. Plastic sheet 1 is inserted in loop 13 or viceversa, on the condition that hole 5 does not correspond with hole 23 of spring 15, and is not held by the plastic key 41, inserted entirely in section 17 of the spring itself. At this point sheet 3 is placed on the external surface of section 17, in order that hole 7 match holes 23 and 5, and stress raiser 25 mentioned above. Screw 11, complete, if necessary, with washer 23, is inserted in stress raiser 25, and tightened in hole 35 until sheet 1 and surface 17, sheet 3 and washer 43, are not pushed against the lower section of surface 19 by the upper section (head) of the screw.

Accordingly, to fit the connection, it will only be necessary to tighten screw 11 tightly, to ensure adequate elasticity of surface 29. Damage of surface 29 is avoided via wing 37, placed on surface 29.

As clearly indicated, the draught of screw 11 is in contact with surface 29, and only with the external circumferential section of central surface 19. This type of configuration allows uniform compression of plastic parts, helping to avoid any loosening or unwanted damage through time.

## Claims

1. Spring for coupling of rigid or semi-rigid plastic sheets, of limited thickness, particularly those used in vehicle bodies, presenting a transveral section, shaped in S, lower surface (17) and upper surface (19), creating the lower loop (13) of the S section, bearing holes or through holes (23, 25) designed for the insertion of the shack (9) of a screw (11) screwed on a hole (35) in the upper surface (29) of the upper loop (27).

2. Spring according to claim 1, characterized by the fact that surface (29), on the opposite section of the connection surface (31) with the central surface (19) creates a substantially perpendicular loop (37), turned downwards. This loop (37), with length sufficient in order that it rest on tip (38) of the above mentioned surface (19) corresponding to the lower connection surface (21) with the lower surface (17).

3. Spring according to claim 1, characterized by the fact that the stress raiser (25) in the central section (19) is rectangular in shape and covers more of the surface, excluding a circumferential external section.

4. Spring according to claim 3, characterized by the fact that the stress raiser extends to the bottom surface (21) connecting the central surface to the lower surface (17).
